# EUROPÄISCHE PATENTSCHRIFT

(11) **EP 3 558 773 B1**
(45) Veröffentlichungstag und Bekanntmachung des Hinweises auf die Patenterteilung: **29.07.2020**
(21) Anmeldenummer: 17786921.1
(22) Anmeldetag: 19.10.2017
(51) Int. Cl.: B60T 8/88, B60T 8/40

(54) **VERFAHREN ZUR VERSTÄRKUNG DER BREMSKRAFT IN EINER ELEKTRONISCH SCHLUPFREGELBAREN FAHRZEUGBREMSANLAGE SOWIE EINE ELEKTRONISCH SCHLUPFREGELBARE FAHRZEUGBREMSANLAGE**
METHOD FOR BOOSTING THE BRAKING FORCE IN AN ELECTRONICALLY SLIP CONTROLLABLE VEHICLE BRAKING SYSTEM AND AN ELECTRONICALLY SLIP CONTROLLABLE VEHICLE BRAKING SYSTEM
PROCÉDÉ PERMETTANT D'AMPLIFIER LA FORCE DE FREINAGE DANS UN SYSTÈME DE FREINAGE DE VÉHICULE À RÉGULATION ANTIPATINAGE ÉLECTRONIQUE AINSI QUE SYSTÈME DE FREINAGE DE VÉHICULE À RÉGULATION ANTIPATINAGE ÉLECTRONIQUE

(30) Priorität: 21.12.2016 DE 102016225694
(43) Veröffentlichungstag der Anmeldung: 30.10.2019
(73) Patentinhaber: Robert Bosch GmbH, 70442 Stuttgart (DE)
(72) Erfinder: VOLLERT, Herbert, 71665 Vaihingen/Enz (DE); HAAG, Florian, 74199 Untergruppenbach (DE); KOLARSKY, Jens, 74321 Bietigheim/Bissingen (DE)
(86) Internationale Anmeldenummer: PCT/EP2017/076729
(87) Internationale Veröffentlichungsnummer: WO 2018/114092

(56) Entgegenhaltungen:
- WO-A1-2009/118208
- US-A1- 2011 241 417

## Beschreibung

### Stand der Technik

Die Erfindung betrifft ein Verfahren zur Verstärkung der Bremskraft in einer elektronisch schlupfregelbaren Fahrzeugbremsanlage und eine elektronisch schlupfregelbare Fahrzeugbremsanlage.

Elektronisch schlupfregelbare Fahrzeugbremsanlagen sind aus dem Stand der Technik hinlänglich bekannt; sie werden vielfach auch als ABS-, ASR- oder ESP-Bremsanlage bezeichnet.

Die aus der WO 2009/118 208 A1 bekannte schlupfregelbare Fahrzeugbremsanlage kommt der nachfolgend erläuterten Erfindung am Nächsten. Die Erfindung unterscheidet sich von diesem nächstkommenden Stand der Technik dadurch, dass von einem elektronischen Steuergerät der Fahrzeugbremsanlage, insbesondere im Falle einer vorliegenden Störung eines Bremskraftverstärkers der Fahrzeugbremsanlage, ein erstes Eingangssignal, welches einen bestehenden Bremswunsch signalisiert, erfasst und in ein erstes Auswertesignal gewandelt wird, dass ein zweites Eingangssignal, welches einen Bremsdruck in einer Druckkammer eines Hauptbremszylinders der Fahrzeugbremsanlage repräsentiert, erfasst und in ein zweites Ausgangssignal gewandelt wird und dass durch mathematische Addition der Auswertesignale ein Summensignal ermittelt wird, welches durch entsprechende elektronische Ansteuerung eines Druckerzeugers der Fahrzeugbremsanlage als Bremsdruck eingestellt wird.

Durch eine derartige Ansteuerung der Schlupfregeleinrichtung lässt sich ein Bremswunsch des Fahrers in einen Bremsdruck umsetzen, ohne dass ein Fahrer eine Störung des Bremskraftverstärkers und oder vom Normalbetrieb abweichende Betätigungsbedingungen der Fahrzeugbremsanlage wahrnimmt.

Weiterhin wird auf die Offenbarung der DE 10 2005 035 595 A1 hingewiesen.

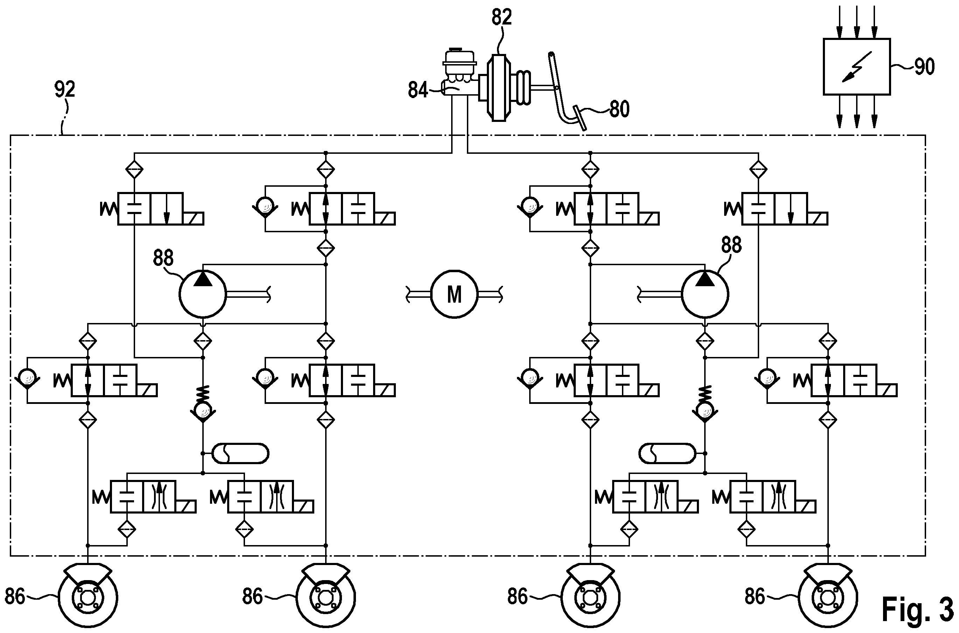

Der prinzipielle Aufbau dieser bekannten schlupfregelbaren Fahrzeugbremsanlage in der Figur 3 gezeigt.

Diese schlupfregelbare Fahrzeugbremsanlage ist ausgestattet mit einer Betätigungseinrichtung 80, beispielsweise in Form eines konventionellen Bremspedals, über welches der Fahrer bei Bedarf seinen Bremswunsch vorgibt. Die Betätigungseinrichtung 80 ist mit einem, exemplarisch pneumatischen Bremskraftverstärker 82 gekoppelt, welcher die vom Fahrer aufgebrachte Betätigungskraft mit Hilfe von pneumatischer Unterstützung verstärkt und damit den Bremskomfort erhöht. Abgesehen von pneumatischen Bremskraftverstärkern sind hydraulische oder elektromechanische Bremskraftverstärker bekannt. Insbesondere die Letzteren können auch unabhängig von der Fahrerbetätigung angesteuert werden, da sie über hierfür geeignete elektronisch ansteuerbare Aktuatoren verfügen.

Bei diesem Stand der Technik wirkt der Bremskraftverstärker 82 der Fahrzeugbremsanlage auf einen Hauptbremszylinder 84 ein. Dieser ist dazu mit wenigstens einem, eine Druckkammer begrenzenden Zylinderkolben ausgestattet (nicht erkennbar), der durch Verschiebung in der Druckkammer einen Bremsdruck aufbaut. An den Hauptbremszylinder 84 sind mehrere Radbremsen 86 angeschlossen, welche dadurch mit dem Bremsdruck des Hauptbremszylinders 84 beaufschlagt werden und letztlich jeweils-zugeordnete Räder des Fahrzeugs abbremsen.

Zwischen Hauptbremszylinder 84 und Radbremse 86 ist eine elektronische Schlupfregeleinrichtung 92 geschalten. Letztere umfasst elektronisch ansteuerbare Komponenten, u.a. einen antreibbaren Druckerzeuger 88 sowie den Bremsdruck der Radbremse modulierende Steuerventile. Eine Ansteuerung dieser Komponenten erfolgt durch ein elektronisches Steuergerät 90, welches den Bremsdruck der Radbremsen 86 an die am zugeordneten Rad vorherrschenden Schlupfverhältnisse anpasst. Diese werden beispielsweise von Drehzahlsensoren an den Rädern erfasst, welche ihre Signale dem elektronischen Steuergerät 90 zuführen. Das elektronische Steuergerät 90 wertet diese Eingangssignale zu Ansteuersignalen aus und steuert damit wiederum die oben erläuterten Komponenten der Schlupfregeleinrichtung 92 an. Die Schlupfregeleinrichtung 92 verteilt den vom Fahrer und/oder vom Bremskraftverstärker aufgebrachten Bremsdruck radindividuell auf die zugeordneten Radbremsen 86.

Davon abgesehen, können Schlupfregeleinrichtungen 92 nach diesem Stand der Technik auch aktiv, das heißt unabhängig vom Fahrer Bremsdruck erzeugen und radindividuell auf die jeweiligen Radbremsen 86 verteilen.

Fällt bei einer derart ausgestatteten Fahrzeugbremsanlage der Bremskraftverstärker aufgrund einer Störung aus, so kann die Bremskraftverstärkung von der Schlupfregeleinrichtung übernommen bzw. kompensiert werden. Dies ist möglich, weil trotz eines Ausfalls des Bremskraftverstärkers bzw. der Verstärkung der Bremskraft, der Fahrer durch Betätigung des Bremspedals unverändert imstande ist, einen Bremsdruck im Hauptbremszylinder aufzubauen. Dieser Bremsdruck ist proportional zum Bremswunsch des Fahrers und ist vom elektronischen Steuergerät als Eingangsgröße erfassbar. Aus dieser Eingangsgröße ermittelt das elektronische Steuergerät ein Ansteuersignal für den Druckerzeuger der Schlupfregeleinrichtung, wobei letzterer dementsprechend einen gegenüber dem vom Fahrer erzeugten Bremsdruck höheren Bremsdruck bereitstellt. Bremsdruck und Bremskraft sind zueinander proportional.
Eine Bremskraftverstärkung durch die Schlupfregeleinrichtung weist jedoch Nachteile auf. Da der Bremsdruck in der Druckkammer des Hauptbremszylinders als Regelgröße verwendet wird, kann die Bremskraftunterstützung erst erfolgen, wenn der Fahrer im Hauptzylinder einen Bremsdruck aufbaut hat. Ohne aktiven Bremskraftverstärker ist allerdings die Kraft, die der Fahrer hierfür benötigt naturgemäß deutlich höher als mit Bremskraftverstärkung. Es ist somit eine sehr hohe Initialkraft notwendig um eine Bremswirkung zu erreichen und entsprechend gering ist der Bremskomfort.

Durch Schwankungen des Drucksignals aufgrund von unterschiedlichen Störungen kann die hydraulische Bremskraftverstärkung durch die Schlupfregeleinrichtung darüber hinaus erst aktiviert werden, wenn ein Grenzwert des Hauptzylinderdrucks überschritten ist. Dieser Grenzwert ist so ausgelegt, dass der Fahrer in jedem Fall das Bremspedal betätigen muss, um den Grenzwert zu überschreiten. Auf diese Weise wird sichergestellt, dass in keinem Fall von der Schlupfregeleinrichtung Druck aufgebaut wird, ohne dass seitens des Fahrers eine Bremsabsicht besteht.
Somit muss der Fahrer zu einer Aktivierung der hydraulischen Bremskraftverstärkung alle mechanischen Kräfte, die einer Betätigung der Betätigungseinheit entgegenstehen, überwinden und muss zusätzlich dazu die Kraft zur Erzeugung eines Bremsdrucks in der Höhe des Grenzwerts aufbringen.

Schließlich sei noch darauf hingewiesen, dass aus dem Stand der Technik darüber hinaus elektronische Schaltereinrichtungen bekannt sind, welche abhängig von einer vom Fahrer aufgebrachten Betätigungskraft und/oder einem Betätigungsweg der Betätigungseinrichtung ein binäres Signal erzeugen, welches dem elektronischen Steuergerät der Schlupfregeleinrichtung zur Weiterverarbeitung zugeführt werden kann. Derartige Schaltereinrichtungen können dabei so ausgeführt sein, dass das Signal unabhängig von der Verfügbarkeit des Bremskraftverstärkers erzeugt wird. Binäre Schaltereinrichtungen funktionieren beispielsweise so, dass ab einer bestimmten anliegenden Betätigungskraft bzw. einem Betätigungsweg ein vorliegendes Signal von 0 auf 1 bzw. umgekehrt von 1 auf 0 gesetzt wird, wobei ein Signalwertwechsel als Sprungfunktion ausgebildet ist.

### Vorteile der Erfindung

Ein Verfahren nach den Merkmalen des Anspruchs 1 hat gegenüber diesem erläuterten Stand der Technik den Vorteil, dass es eine verminderte Initialkraft zur Aktivierung einer hydraulischen Verstärkung der Schlupfregeleinrichtung erfordert und dass folglich dem Fahrer ein verbessertes Pedalgefühl bereitgestellt wird, insbesondere dann, wenn das Verfahren aufgrund einer aufgetretenen Störung am Bremskraftverstärker durchgeführt wird. Das vorgeschlagene Verfahren greift wenigstens teilweise auf ohnehin vorhandene Sensorsignale zurück, wird im elektronischen Steuergerät durchgeführt und verursacht keinen nennenswerten baulichen Zusatzaufwand.

Die Erfindung ist auf ein Verfahren gerichtet, das angibt wie aus zur Verfügung stehenden Eingangssignalen ein Sollwert für einen Bremsdruck generiert wird, welcher anschließend durch entsprechende elektronische Ansteuerung des Druckerzeugers der Schlupfregeleinrichtung eingestellt wird. Für das vorgeschlagene Verfahren werden ein erstes Eingangssignal, welches einen Bremswunsch des Fahrers anzeigt und ein zweites Eingangssignal, welches den vom Fahrer generierten Bremsdruck in der Druckkammer des Hauptbremszylinders repräsentiert, im elektronischen Steuergerät erfasst und zu Auswertesignalen weiterverarbeitet, die anschließend miteinander zu einem Summenwert addiert werden. Der Summenwert entspricht einem Bremsdrucksollwert, der in ein dementsprechendes Ansteuersignal für den Druckerzeuger umgewandelt wird.

Vorteile oder vorteilhafte Weiterbildungen der Erfindung ergeben sich aus den Unteransprüchen oder aus der nachfolgenden Beschreibung.

### Zeichnung

Ein Ausführungsbeispiel der Erfindung ist in der Zeichnung veranschaulicht und wird in der nachfolgenden Beschreibung detailliert erläutert.
Die Figur 1 zeigt das erfindungsgemäße Verfahren anhand eines Ablaufdiagramms,
die Figur 2 zeigt anhand von insgesamt 3 Diagrammen 2a bis 2c, wie Eingangssignale vom elektronischen Steuergerät miteinander zu einem Bremsdrucksollwert verknüpft werden, aus welchem letztlich das elektronische Steuergerät ein Ansteuersignal zur Ansteuerung eines Druckerzeuger der elektronischen Schlupfregeleinrichtung generiert. Die Diagramme 2a bis 2c zeigen Signalverläufe über die Zeit, die jeweils zeitsynchron zueinander aufgenommen sind.
Figur 3 zeigt, wie bereits erwähnt den Grundaufbau einer der Erfindung zugrundeliegenden schlupfregelbaren Fahrzeugbremsanlage.

### Beschreibung

Das nachfolgend beschriebene Verfahren findet bei einer Fahrzeugbremsanlage Anwendung, welche, wie eingangs erläutert und in Figur 3 gezeigt, wenigstens mit einer Betätigungseinrichtung 80, einem Bremskraftverstärker 82, einem Hauptbremszylinder 84, einer Schlupfregeleinrichtung 92 und einer mit Bremsdruck beaufschlagbaren Radbremse 86 ausgestattet ist.

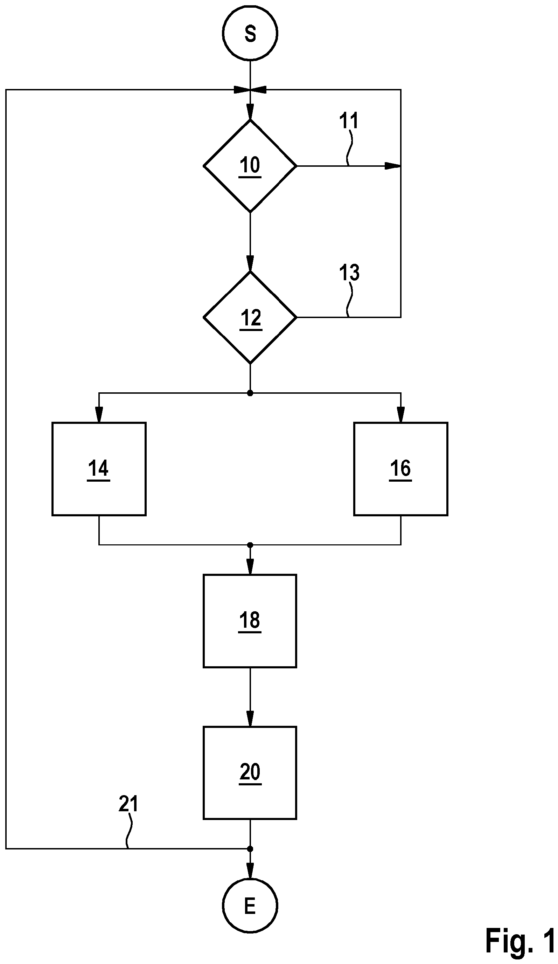

Das anhand von Figur 1 veranschaulichte und der Erfindung zugrunde liegende Verfahren ist in Form von Programmschritten eines Computerprogramms in einem der Schlupfregeinrichtung 92 zugeordneten elektronischen Steuergerät 90 einer Fahrzeugbremsanlage hinterlegt. Beginn bzw. Start und Ende des Verfahrens sind in der Figur 1 anhand der Symbole S und E gekennzeichnet.

Ein erster Schritt 10 nach dem Start des Verfahrens besteht in einer Überprüfung der Fahrzeugbremsanlage hinsichtlich einer am Bremskraftverstärker vorliegenden Störung bzw. eines am Bremskraftverstärker vorliegenden Defekts.

Diese Überprüfung kann beispielsweise dadurch erfolgen, dass festgestellt wird, ob ein Eingabemittel des Bremskraftverstärkers, über welches der Bremskraftverstärker mit einer vom Fahrer aufgebrachten Betätigungskraft beaufschlagbar ist, eine Relativbewegung gegenüber einem, eine Verstärkung dieser Betätigungskraft bewirkenden Verstärkerelement des Bremskraftverstärkers ausführt. Bei einem pneumatischen Bremskraftverstärker ist das Eingabemittel beispielsweise ein mit dem Bremspedal gekoppeltes Betätigungsgestänge und das Verstärkerelement eine mit Unterdruck beaufschlagbare und mit dem Betätigungsgestänge gekoppelte Membran.

Eingabemittel und Verstärkungselement des Bremskraftverstärkers bewegen sich im ungestörten Betrieb miteinander bzw. führen keine Relativbewegung zueinander aus. Tritt also bei einer Betätigung des Bremskraftverstärkers eine solche Relativbewegung bzw. eine Wegedifferenz auf, so kann aus dieser Wegedifferenz auf eine bestehende Störung bzw. auf einen Defekt des Bremskraftverstärkers geschlossen werden.

Diese Wegedifferenz ist beispielsweise durch die elektronische Auswertung von Signalen von Wegesensoren feststellbar, welche einerseits zumindest mittelbar eine Bewegung des Eingabemittels und andererseits eine Bewegung des Verstärkerelements erfassen. Eine elektronisch schlupfregelbare Fahrzeugbremsanlage ist, zumindest was die Betätigungseinrichtung betrifft, ohnehin mit einem solchen Wegsensor ausgestattet, um einen Bremswunsch des Fahrers zu erfassen. Da das Verstärkungselement des Bremskraftverstärkers im Falle eines bestehenden Defekts nicht angetrieben ist, besteht eine Proportionalität zwischen einer festgestellten Wegdifferenz und einem Bremswunsch des Fahrers.

Ergibt die Überprüfung der Funktionstüchtigkeit des Bremskraftverstärkers keine vorliegende Störung, wird das Verfahren, gemäß Pfeil 11, beendet und zu einem späteren Zeitpunkt von neuem durchgeführt.

Wurde jedoch auf eine bestehende Betriebsstörung des Bremskraftverstärkers erkannt, wird in einem nachfolgenden zweiten Schritt 12 geprüft, ob seitens des Fahrers tatsächlich ein Bremswunsch besteht. Dieses Vorgehen ist notwendig um zu verhindern, dass eine Bremskraftverstärkung durch die Schlupfregeleinrichtung vorgenommen wird, obwohl gar kein Bremswunsch des Fahrers vorliegt.

Auf einen bestehenden Bremswunsch wird beispielsweise geschlossen, wenn ein festlegbarer Mindestwert für eine Kraft oder für einen Weg mit dem die Betätigungseinrichtung vom Fahrer beaufschlagt ist, überschritten ist. Dies kann mit Hilfe eines aus dem Stand der Technik bekannten Schaltereinrichtung oder eines Wegsensors durchgeführt werden. Signale derartiger Sensoren lassen sich im elektronischen Steuergerät relativ einfach auswerten.

Falls der Mindestwert nicht überschritten sein sollte, wird das Verfahren, wie mit Pfeil 13 bezeichnet, ebenfalls abgebrochen und zu einem späteren Zeitpunkt von Beginn an neu gestartet.

Bei Überschreitung des Mindestwerts steht fest, dass eine Funktionsstörung des Bremskraftverstärkers vorliegt und dass der Fahrer einen Bremswunsch geäußert hat.

Ziel ist es dann, den Bremswunsch durch entsprechende Ansteuerung der Schlupfregeleinrichtung in einen Bremsdruck umzusetzen, ohne dass der Fahrer die Störung des Bremskraftverstärkers und/oder gegenüber dem Normalbetrieb deutlich abweichende Betätigungsbedingungen der Fahrzeugbremsanlage wahrnimmt.

Das vorgeschlagene Verfahren teilt sich dazu in zwei parallele Verfahrenszweige auf. In den beiden Verfahrenszweigen werden in den Schritten 14 und 16 auf voneinander unabhängige Art und Weise vom elektronischen Steuergerät zwei Auswertesignale erzeugt, aus denen in einem nachfolgenden Schritt 18 ein Summensignal ermittelt wird, welches einen Bremsdrucksollwert darstellt.

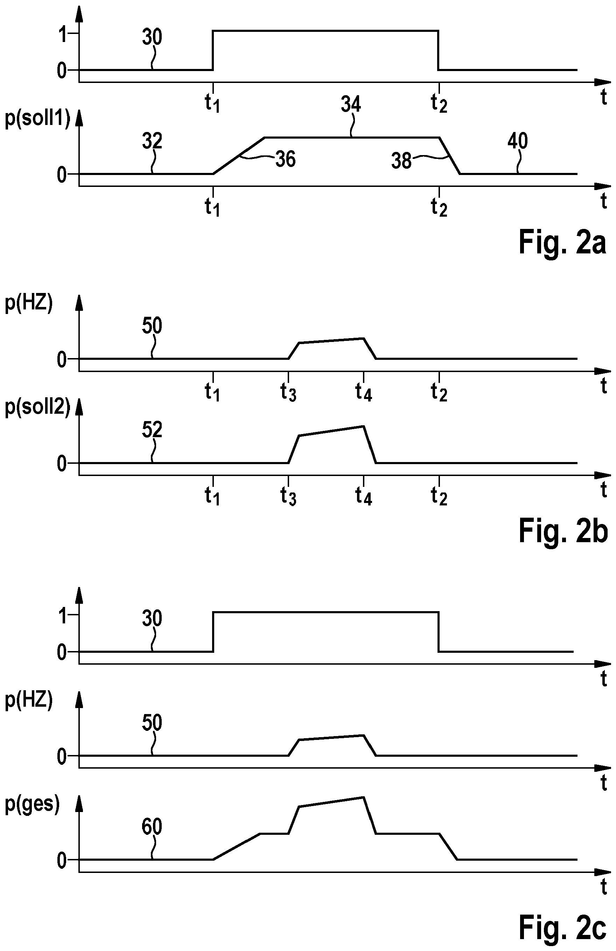

Dem Schritt 14 des in Figur 1 linken Verfahrenszweigs liegt ein den Bremswunsch des Fahrers repräsentierendes Eingangssignal 30 (Fig. 2a) zugrunde. Bei diesem Eingangssignal handelt es sich um ein binäres Signal, das in einer Sprungfunktion von einem ersten Signalwert 0 in einen zweiten Signalwert 1 wechselt, sobald aufgrund der Fahrerbeaufschlagung der Betätigungseinrichtung der Mindestwert einer Betätigungskraft oder eines Betätigungswegs über- bzw. unterschritten wird. Mit einem ersten Signalwertwechsel wird vom elektronischen Steuergerät ein erstes, einen ersten Sollbremsdruckverlauf darstellendes erstes Auswertesignal festgelegt. Dieser Sollbremsdruckverlauf definiert sich über die Höhe eines einzustellenden ersten Sollbremsdrucks 34, den Verlauf eines Druckaufbaus 36 bis zum Erreichen dieses ersten Sollbremsdrucks 34 sowie dem Verlauf eines Druckabbaus 38 zurück bis auf einen Ursprungsbremsdruck 40. Der Druckaufbau 36 beginnt mit dem Wechsel vom Signalwert 0 zum Signalwert 1, während der Druckabbau 38 zu einem Zeitpunkt eingeleitet wird, an dem das den Bremswunsch repräsentierende binäre Eingangssignal vom Signalwert 1 zurück in den Signalwert 0 wechselt. Druckaufbau 36 und Druckabbau 38 können gleiche oder unterschiedliche Gradienten aufweisen. Beim Ausführungsbeispiel sind die jeweiligen Gradienten konstant, prinzipiell ebenso vorstellbar sind jedoch auch veränderliche Gradienten.

Dem zweiten bzw. rechts gezeichneten Verfahrenszweig liegt demgegenüber der durch die Fahrerbetätigung im Hauptbremszylinder 84 (Fig.1) erzeugte Bremsdruck als zweites Eingangssignal 50 (Fig. 2b) zugrunde. Dieser aufgebaute Bremsdruck wird entsprechend einer im elektronischen Steuergerät hinterlegten Verstärkungsfunktion in ein zweites Auswertesignal 52, in Form eines gegenüber dem Bremsdruck des Hauptbremszylinders erhöhten zweiten Sollbremsdrucks umgerechnet.

In dem den Schritten 14 und 16 nachfolgenden Schritt 18 werden die beiden, vom elektronischen Steuergerät ermittelten Auswertesignale 32, 52 mathematisch zu einem Summensignal 60 addiert. Das Summensignal 60 entspricht einem Sollbremsdruckverlauf, der nachfolgend in ein elektronisches Ansteuerungssignal gewandelt wird. Mit diesem Ansteuersignal wird schließlich der Druckerzeuger 88 bzw. dessen Antrieb angesteuert.

Die Schlupfregeleinrichtung 92 stellt daraufhin einen entsprechenden Sollbremsdruck an den Radbremsen 86 bereit. Dieser entspricht idealer Weise wenigstens annähernd einem durch die Betätigung des Fahrers erzeugten Bremsdruck bei funktionstüchtigem Bremskraftverstärker. Auch die vom Fahrer aufzubringenden Betätigungskräfte sowie die vom Fahrer wahrnehmbare Pedalrückwirkung unterscheiden sich kaum wahrnehmbar von den entsprechenden Größen bei ungestörtem Betrieb der Fahrzeugbremsanlage.

Das erläuterte Verfahren endet nachdem der Schritt 20 durchgeführt worden ist und kann, wie anhand von Pfeil 21 dargestellt, zu einem beliebigen späteren Zeitpunkt neu gestartet werden.

Figur 2 veranschaulicht das erläuterte Verfahren anhand von insgesamt drei Diagrammen 2a - 2c. Die in den Diagrammen 2a - 2c gezeigten Signalverläufe geben jeweils die vom elektronischen Steuergerät 90 erfassten Eingangssignale sowie die aus diesen Eingangssignalen entsprechend dem zuvor beschriebenen Verfahren generierten Auswertesignale sowie das aus diesen Auswertesignalen ermittelten Summensignal wieder. Die Signalverläufe sind dabei jeweils über die Zeit sowie zeitsynchron zueinander aufgetragen.

Diagramm 2a veranschaulicht den Signalverlauf des im Schritt 14 ermittelten ersten Auswertesignals 32, während Diagramm 2b den Signalverlauf des nach dem Schritt 16 ermittelten zweiten Auswertesignals 52 darstellt. Diagramm 2c gibt den Signalverlauf eines aus den beiden Auswertesignalen 32, 52 generierten Summensignals 60 wieder.

In Diagramm 2a ist anhand eines binären Eingangssignals 30, der existierende Fahrerbremswunsch des Fahrers dargestellt. Dieses Eingangssignal 30 wechselt zu einem Zeitpunkt t1 in einer Sprungfunktion von einem Signalwert 0 zu einem Signalwert 1 und zu einem zweiten Zeitpunkt t2 vom Signalwert 1 zurück zum Signalwert 0.

Zum Zeitpunkt t1 hat der Fahrer eine Mindestbetätigungskraft bzw. einen Mindestbetätigungsweg überschritten und damit den bestehenden Bremswunsch signalisiert, während er mit seiner Betätigung der Fahrzeugbremsanlage zum Zeitpunkt t2 die Mindestbetätigungskraft bzw. den Mindestbetätigungsweg unterschreitet und damit den Bremswunsch beendet bzw. zurücknimmt.

Das elektronische Steuergerät 90 der Schlupfregeleinrichtung weist dem Eingangssignal 30 ein darin hinterlegtes erstes Auswertesignal 32 zu. Dieses Auswertesignal 32 entspricht einer Druckkennlinie über die Zeit, deren Verlauf von einem Sollbremsdruck 34, einen Druckaufbau 36 bis zum Erreichen des Sollbremsdrucks 34 und einen Druckabbau 38 vom Sollbremsdruck 34 bis zu einem Ursprungsbremsdruck 40 definiert ist. Alle aufgezählten Größen sind fahrzeugspezifisch festlegbar und im elektronischen Steuergerät 90 speicherbar. Der Druckaufbau 36 beginnt zum Zeitpunkt t1, also mit der Überschreitung der Mindestbetätigungskraft bzw. des Mindestbetätigungswegs durch den Fahrer beim Betätigen der Betätigungseinrichtung, während ein Bremsdruckabbau 38 zum Zeitpunkt t2 beginnt, das heißt, wenn ein Mindestbetätigungsweg bzw. eine Mindestbetätigungskraft vom Fahrer durch die Rücknahme einer Betätigung der Betätigungseinrichtung 80 unterschritten wird.

In Diagramm 2b wird als Eingangsgröße 50 der Bremsdruckverlauf in einer Druckkammer des Hauptbremszylinders 84 während einer Betätigung der Fahrzeugbremsanlage durch den Fahrer erfasst. Ein Bremsdruckanstieg im Hauptbremszylinder 84 beginnt zu einem Zeitpunkt t3. Ein bestehender Zeitverzug zwischen den Zeitpunkten t1 und t3 ist u.a. durch einen zu überwindenden mechanischen Leerweg zu Beginn einer Betätigung der Fahrzeugbremsanlage begründet. Innerhalb dieses Leerwegs bewirkt eine Betätigung der Betätigungseinrichtung keine Verschiebung eines Zylinderkolbens in der Druckkammer des Hauptbremszylinders 84 hinein statt und folglich erfolgt auch keine Bremsdruckänderung. Ein vorhandener Leerweg verbessert unter anderem die Dosierbarkeit eines Bremsvorgangs und ermöglicht darüber hinaus die Einstellung einer vom Fahrzeughersteller gewünschten Bremsbetätigungscharakteristik der Fahrzeugbremsanlage.

Eine Reduzierung des Bremsdrucks in der Druckkammer des Hauptbremszylinders 84 beginnt zum Zeitpunkt t4. Dieser Zeitpunkt t4 liegt auf der Zeitachse vor dem Zeitpunkt t2, weil der Fahrer zu diesem Zeitpunkt t4 zwar nach wie vor das Bremspedal bzw. die Betätigungseinrichtung 80 betätigt, seine Betätigungskraft jedoch bereits reduziert hat, bevor er schließlich die Mindestbetätigungskraft bzw. den Mindestbetätigungsweg unterschreitet.

Das Eingangssignal 50 wird mit Hilfe einer im elektronischen Steuergerät hinterlegten Verstärkungsfunktion verstärkt. Darstellungsgemäß handelt es sich bei der dargestellten Verstärkungsfunktion um eine lineare Verstärkung, was jedoch nicht zwingend ist. Das so verstärkte Signal ergibt ein zweites Auswertesignal 52.

Das dritte Diagramm 2c zeigt den Verlauf eines aus den beiden Auswertesignalen 32 und 52 generierten Summensignals 60. Letzteres ist durch mathematische Addition des ersten Auswertesignals 32 mit dem zweiten Auswertesignals 52 im elektronischen Steuergerät 90 der Schlupfregeleinrichtung erzeugt worden. Der Verlauf des Summensignals 60 entspricht einem Bremsdrucksollwert, welcher mit Schritt 20 im elektronischen Steuergerät 90 zu einem elektronischen Ansteuersignal gewandelt wird und mit dem ein ansteuerbarer Antrieb eines Druckerzeugers 88 der Fahrzeugbremsanlage schließlich angesteuert wird. Der Druckerzeuger erzeugt dementsprechend einen Bremsdruck, dessen Druckverlauf dem Verlauf des Summensignals 60 weitestgehend entspricht. Die im Diagramm 2c dargestellten Eingangssignale 30 und 50 entsprechend denen der Diagramme 2a und 2b und sind lediglich einem einfacheren Verständnis halber nochmals dargestellt.

## Patentansprüche

1. Verfahren, zur Verstärkung einer Bremskraft in einer elektronisch schlupfregelbaren Fahrzeugbremsanlage, umfassend
eine von einem Fahrer beaufschlagbare Betätigungseinrichtung (80),
einen Bremskraftverstärker (82) zur Verstärkung einer vom Fahrer aufgebrachten Betätigungskraft,
einen vom Bremskraftverstärker (82) beaufschlagbaren Hauptbremszylinder (84)
eine an den Hauptbremszylinder (84) angeschlossene Radbremse (86) und eine elektronische Schlupfregeleinrichtung (92) zur Modulation eines Bremsdrucks der Radbremse (86),
wobei der Schlupfregeleinrichtung (92) ein elektronisches Steuergerät (90) und
ein von einer elektronisch ansteuerbaren Antriebseinheit antreibbarer Druckerzeuger (88) zugeordnet ist,
**dadurch gekennzeichnet,**
**dass** vom elektronischen Steuergerät (90), insbesondere im Falle einer vorliegenden Störung des Bremskraftverstärkers (82),
ein erstes Eingangssignal (30), welches einen bestehenden Bremswunsch signalisiert, erfasst und in ein erstes Auswertesignal (32) gewandelt wird, dass ein zweites Eingangssignal (50), welches einen Bremsdruck in der Druckkammer des Hauptbremszylinders (84) repräsentiert, erfasst und in ein zweites Auswertesignal (52) gewandelt wird und dass durch mathematische Addition des ersten Auswertesignals (32) mit dem zweiten Auswertesignal (52) ein Summensignal (60) ermittelt wird, welches durch entsprechende elektronische Ansteuerung des Druckerzeugers als Bremsdruck von der Schlupfregeleinrichtung (92) eingestellt wird.

2. Verfahren nach Anspruch 1, **dadurch gekennzeichnet,**
**dass** das erste Eingangssignal (30) mittels eines ersten Sensors erfasst wird, welcher der Betätigungseinrichtung (80) zugeordnet ist und welcher insbesondere als ein Kraftsensor oder als ein Wegsensor ausgeführt ist.

3. Verfahren nach Anspruch 1 oder 2, **dadurch gekennzeichnet,**
**dass** das erste Eingangssignal (30) ein binäres Signal ist, dessen einer Signalwert in einer Sprungfunktion in einen zweiten anderen Signalwert wechselt, wenn mit der Betätigung der Betätigungseinrichtung (80) ein vorgebbaren Schwellenwert über- oder unterschritten wird.

4. Verfahren nach einem der Ansprüche 1 bis 3, **dadurch gekennzeichnet,**
**dass** vom elektronischen Steuergerät (90) das erste Eingangssignal (30) in ein erstes Auswertesignal (32) gewandelt wird, welches durch einen Bremsdrucksollwert (34), einen Druckaufbau (36) bis zum Erreichen des Bremsdrucksollwerts (34) und einen Druckabbau (38) bis auf einen Ursprungsbremsdruck (40) gekennzeichnet ist.

5. Verfahren nach einem der Ansprüche 1 bis 4, **dadurch gekennzeichnet,**
**dass** das zweite Eingangssignal (50) von einem dem Hauptbremszylinder (84) zugeordneten zweiten Sensor bereitgestellt wird, welcher einen vom Fahrer im Hauptbremszylinder (84) erzeugten Bremsdruck erfasst.

6. Verfahren nach Anspruch 5, **dadurch gekennzeichnet,**
**dass** aus dem zweiten Eingangssignal (50) entsprechend einer im elektronischen Steuergerät (90) hinterlegten mathematischen Funktion ein zweites Auswertesignal (52) generiert wird, wobei
das zweite Auswertesignal (52) einen Sollbremsdruck repräsentiert, dessen Wert höher ist, als der am Hauptbremszylinder (84) vom Fahrer erzeugte Bremsdruck.

7. Verfahren nach Anspruch 2, **dadurch gekennzeichnet,**
**dass** auf eine Störung des Bremskraftverstärkers (82) geschlossen wird anhand einer bestehenden Wegdifferenz zwischen einem Betätigungsweg der Betätigungseinrichtung (80) und einer Auslenkbewegung eines Verstärkerelements des Bremskraftverstärkers (82).

8. Elektronisch schlupfregelbare Fahrzeugbremsanlage mit einer vom Fahrer betätigbaren Betätigungseinrichtung (80), einem Bremskraftverstärker (82) zur Verstärkung einer vom Fahrer aufgebrachten Betätigungskraft , einem vom Bremskratfverstärker (82) beaufschlagten Hauptbremszylinder (84), einer an den Hauptbremszylinder (84) angeschlossenen Radbremse (86) und einer Schlupfregeleinrichtung (92) zur Modulation eines Bremsdrucks der wenigstens einen Radbremse (86), wobei die Schlupfregeleinrichtung (92) ein elektronisches Steuergerät (90) und einen von einer ansteuerbaren Antriebseinheit angetriebenen Druckerzeuger (88) umfasst,
**dadurch gekennzeichnet,**
**dass** das elektronische Steuergerät (90) ausgelegt ist um den Druckerzeuger (88) gemäß einem Verfahren nach den Merkmalen der Ansprüche 1 bis 7 anzusteuern.

## Claims

1. Method for boosting a braking force in an electronically slip-controllable vehicle brake system, comprising
an actuation device (80) which can be acted on by a driver, a brake booster (82) for boosting an actuation force which is applied by the driver, a master brake cylinder (84) which can be acted on by the brake booster (82), a wheel brake (86) which is connected to the master brake cylinder (84), and an electronic slip control device (92) for modulating a brake pressure of the wheel brake (86), wherein the slip control device (92) can be assigned an electronic control unit (90) and a pressure generator (88) which can be driven by a drive unit which can be actuated electronically,
**characterized**
**in that** a first input signal (30), which signals a brake request which is present, is registered and converted into a first evaluation signal (32) by the electronic control unit (90), in particular when there is a fault in the brake booster (82), in that a second input signal (50), which represents a brake pressure in the pressure chamber of the master brake cylinder (84) is registered and converted into a second evaluation signal (52), and in that a sum signal (60), which is set as the brake pressure by the slip control device (92) by means of corresponding electronic actuation of the pressure generator, is determined by a mathematical addition of the first evaluation signal (32) to the second evaluation signal (52).

2. Method according to Claim 1, **characterized**
**in that** the first input signal (30) is registered by means of a first sensor, which is assigned to the actuation device (80) and which is embodied, in particular, as a force sensor or as a travel sensor.

3. Method according to Claim 1 or 2, **characterized**
**in that** the first input signal (30) is a binary signal, the one signal value of which changes into a second, different signal value in a jump function, if a predefinable threshold value is exceeded or undershot when the actuation device (80) is actuated.

4. Method according to one of Claims 1 to 3,
**characterized**
**in that** the electronic control unit (90) converts the first input signal (30) into a first evaluation signal (32) which is **characterized by** a brake pressure setpoint value (34), an increase in pressure (36) until the brake pressure setpoint value (34) is reached, and a decrease in pressure (38) to an original brake pressure (40).

5. Method according to one of Claims 1 to 4,
**characterized**
**in that** the second input signal (50) is made available by a second sensor which is assigned to the master brake cylinder (84) and which registers a brake pressure which is generated in the master brake cylinder (84) by the driver.

6. Method according to Claim 5, **characterized**
**in that** a second evaluation signal (52) is generated from the second input signal (50) in accordance with the mathematical function which is stored in the electronic control unit (90), wherein the second evaluation signal (52) represents a setpoint brake pressure whose value is higher than the brake pressure which is generated at the master brake cylinder (84) by the driver.

7. Method according to Claim 2, **characterized in that** it is inferred that there is a fault in the brake booster (82), on the basis of an existing travel difference between an actuation travel of the actuation device (80) and a deflection movement of a booster element of the brake booster (82).

8. Electronically slip-controllable vehicle brake system having an actuation device (80) which can be actuated by the driver, a brake booster (82) for boosting an actuation force which is applied by the driver, a master brake cylinder (84) which is acted on by the brake booster (82), a wheel brake (86) which is connected to the master brake cylinder (84), and a slip control device (92) for modulating a brake pressure of the at least one wheel brake (86), wherein the slip control device (92) comprises an electronic control unit (90) and pressure generator (88) which is driven by a drive unit which can be actuated,
**characterized**
**in that** the electronic control unit (90) is configured to actuate the pressure generator (88) in accordance with the method according to the features of Claims 1 to 7.

## Revendications

1. Procédé permettant d'amplifier une force de freinage dans un système de freinage de véhicule à régulation antipatinage électronique, comprenant
un dispositif d'actionnement (80) pouvant être manœuvré par un conducteur,
un servofrein (82) permettant d'amplifier une force d'actionnement appliquée par le conducteur,
un maître-cylindre de frein (84) qui peut être actionné par le servofrein (82),
un frein de roue (86) relié au maître-cylindre de frein (84) et
un dispositif de régulation antipatinage électronique (92) permettant de moduler la pression de freinage du frein de roue (86),
dans lequel un appareil de commande électronique (90) et un générateur de pression (88) pouvant être entraîné par une unité d'entraînement à commande électronique sont associés au dispositif de régulation antipatinage (92), **caractérisé en ce que**
l'appareil de commande électronique (90), notamment en cas de défaillance du servofrein (82),
détecte un premier signal d'entrée (30) qui signale une demande de freinage en cours, celui-ci étant converti en un premier signal d'évaluation (32),
détecte un deuxième signal d'entrée (50) représentant une pression de freinage dans la chambre de pression du maître-cylindre de frein (84), celui-ci étant converti en un deuxième signal d'évaluation (52), et
**en ce qu'**un signal somme (60) est déterminé par addition mathématique du premier signal d'évaluation (32) et du deuxième signal d'évaluation (52), lequel est réglé par le dispositif de régulation antipatinage (92) en tant que pression de freinage au moyen d'une commande électronique correspondante du générateur de pression.

2. Procédé selon la revendication 1, **caractérisé en ce que**
le premier signal d'entrée (30) est détecté au moyen d'un premier capteur qui est associé au dispositif d'actionnement (80) et qui est notamment réalisé sous la forme d'un capteur de force ou d'un capteur de course.

3. Procédé selon la revendication 1 ou 2, **caractérisé en ce que**
le premier signal d'entrée (30) est un signal binaire dont une valeur de signal se transforme, par une fonction de saut, en une deuxième valeur de signal différente lorsqu'une valeur de seuil prédéfinissable est franchie en sens croissant ou décroissant lors de l'actionnement du dispositif d'actionnement (80).

4. Procédé selon l'une des revendications 1 à 3,
**caractérisé en ce que**
le premier signal d'entrée (30) est converti par l'appareil de commande électronique (90) en un premier signal d'évaluation (32), qui est **caractérisé par** une valeur de consigne de pression de freinage (34), par une montée en pression (36) jusqu'à ce que la valeur de consigne de pression de freinage (34) soit atteinte et par une baisse de pression (38) jusqu'à une pression de freinage initiale (40).

5. Procédé selon l'une des revendications 1 à 4,
**caractérisé en ce que**
le deuxième signal d'entrée (50) est fourni par un deuxième capteur associé au maître-cylindre de frein (84), lequel capteur détecte une pression de freinage générée par le conducteur dans le maître-cylindre de frein (84).

6. Procédé selon la revendication 5, **caractérisé en ce qu'**un deuxième signal d'évaluation (52) est généré à partir du deuxième signal d'entrée (50) conformément à une fonction mathématique stockée dans l'unité de commande électronique (90), dans lequel
le deuxième signal d'évaluation (52) représente une pression de freinage de consigne dont la valeur est supérieure à la pression de freinage générée par le conducteur au niveau du maître-cylindre de frein (84).

7. Procédé selon la revendication 2,
**caractérisé en ce qu'**une défaillance du servofrein (82) est déduite sur la base d'une différence de course se produisant entre une course d'actionnement du dispositif d'actionnement (80) et un mouvement de déviation d'un élément amplificateur du servofrein (82).

8. Système de freinage de véhicule à régulation antipatinage électronique, comprenant un dispositif d'actionnement (80) pouvant être actionné par le conducteur, un servofrein (82) permettant d'amplifier une force d'actionnement appliquée par le conducteur, un maître-cylindre de frein (84) sollicité par le servofrein (82), un frein de roue (86) relié au maître-cylindre de frein (84) et un dispositif de régulation antipatinage (92) permettant de moduler une pression de freinage dudit au moins un frein de roue (86), dans lequel le dispositif de régulation antipatinage (92) comprend un appareil de commande électronique (90) et un générateur de pression (88) entraîné par une unité d'entraînement commandable, **caractérisé en ce que** l'appareil de commande électronique (90) est conçu pour commander le générateur de pression (88) conformément à un procédé selon les caractéristiques des revendications 1 à 7.
